# EUROPEAN PATENT APPLICATION

(11) **EP 1 769 664 A1**
(43) Date of publication of application: **04.04.2007**
(21) Application number: 06380209.4
(22) Date of filing: 25.07.2006
(51) Int. Cl.: A01D 34/43, A01D 75/30

(54) **Land clearing machine**

(30) Priority: 30.09.2005 ES 200502136 U
(71) Applicant: Serrat Alcay, Jose, 22510 Binaced (Huesca) (ES); Serrat Alcay, Pedro, 22510 Binaced (Huesca) (ES); Serrat Alcay, Raul, 22510 Binaced (Huesca) (ES)
(72) Inventor: Serrat Alcay, Jose, 22510 Binaced (Huesca) (ES); Serrat Alcay, Pedro, 22510 Binaced (Huesca) (ES); Serrat Alcay, Raul, 22510 Binaced (Huesca) (ES)
(74) Representative: Carpintero Lopez, Francisco

(57) **Abstract**

The machine is fitted with a three-point support (1) for coupling on a tractor vehicle, on which there are two swivel-mounted side operating heads (7-7') that are able to take up a horizontal or sensibly horizontal working disposition, or else to swivel upwards to a vertical position, operated by respective hydraulic cylinders (11), in order to permit that a machine, having a considerable working width, may travel along any public highway, drawn by a tractor vehicle, with its heads folded up in the vertical position and, therefore, without exceeding the dimensional limitations laid down in the highway code. The heads (7) swivel on the actual shaft (5) via which motion is transmitted to the machine rotor shafts.

## Description

### OBJECT OF THE INVENTION

The present invention refers to a land clearing machine, of the type that use a plurality of articulated crushing hammers mounted on a rotor, which act inside a protection housing on which they perform the ripping or crushing, for example, of plant waste.

The object of the invention is to achieve a machine with a considerably greater working width - practically double - than conventional land clearing machines, with full operational efficacy and without said measurements or dimensions representing an obstacle when it comes to transferring the machine from one place to another.

### BACKGROUND OF THE INVENTION

Land clearing machines known to date have a protection housing, provided with means for coupling to a farm tractor vehicle, a housing accommodating a rotor shaft that carries a plurality of crushing hammers or rippers, said housing being further provided with a ground support roller that establishes the working level of the ripper, which receives the necessary motion for its rotor shaft from the hydraulic circuit of the actual tractor vehicle.

The movement of the machine on the public highway predetermines that the length of its housing may not exceed the maximum dimensions that permit such road use, which represents an evidently undesirable limitation.

### DESCRIPTION OF THE INVENTION

The land clearing machine proposed by the invention resolves the above-mentioned problems in a fully satisfactory way, as, thanks to its special design, it is in a position to incorporate two or more rotor shafts, with their respective protection housings, working behind and on both sides of the tractor vehicle, achieving a broad working strip without said shafts proving any obstacle whatsoever during the transporting of the machine, inasmuch as they fold back up to a vertical position in which they do not protrude in the slightest from the sides of the tractor vehicle.

This is achieved without having any unfavourable effect on the system for transmitting motion to said rotor shafts since their swivelling takes place on the machine drive shaft, which adopts a middle longitudinal disposition. This means that rotor shaft modularity or plurality is achieved with a structure of the utmost simplicity and therefore of maximum economy.

In accordance with another of the features of the invention, provision has been made for said rotors to overlap partially at their inner end in order to avoid dead spaces in the ripping operation.

The side drive systems that operate the rotors are housed in the interior part of the machine assembly, thereby leaving the sides unobstructed so that they may perform their function efficiently.

The modularity or splitting of the rotor also permits better adaptation to the ground surface, especially when this is uneven.

According to an alternative embodiment of the invention, the two afore-mentioned rotor shafts may have independent drive instead of there being a direct drive system from one to the other, and their support shaft may be split in its middle section, where a system of connecting rods is established making up a deformable parallelogram, operated by a hydraulic or pneumatic cylinder, so that the afore-mentioned heads may have their relative position adjusted by means of said parallelogram and working strips of varying widths may be achieved in keeping with the specific requirements in every case.

Lastly, in accordance with another of the features of the invention, the cylinders with which the heads are folded are assisted by respective safety plates, which keep said heads locked in their vertical transport position, thereby preventing them from dropping accidentally or suddenly swivelling sideways due to trouble in the hydraulic circuit supplying these cylinders.

### DESCRIPTION OF THE DRAWINGS

To supplement the description being given and in order to assist a clearer appreciation of the features of the invention, in accordance with an example of preferred embodiment of same, as an integral part of said description it is accompanied by a set of drawings wherein for purely informative and non-restrictive purposes there is represented the following:
Figure 1.- It shows an upper perspective view of a land clearing machine executed in accordance with the object of the present invention.
Figure 2.- It shows a lower perspective view of the same machine.
Figure 3.- According to a representation similar to figure 1, it shows the alternative embodiment of the land clearing machine in which the heads have an adjustable relative position.

### PREFERRED EMBODIMENT OF THE INVENTION

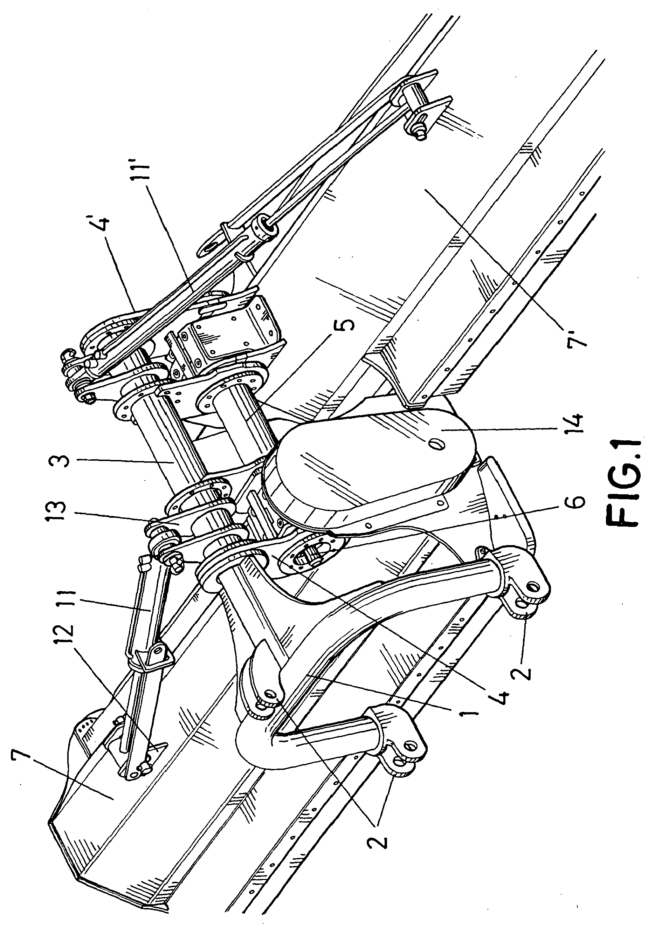

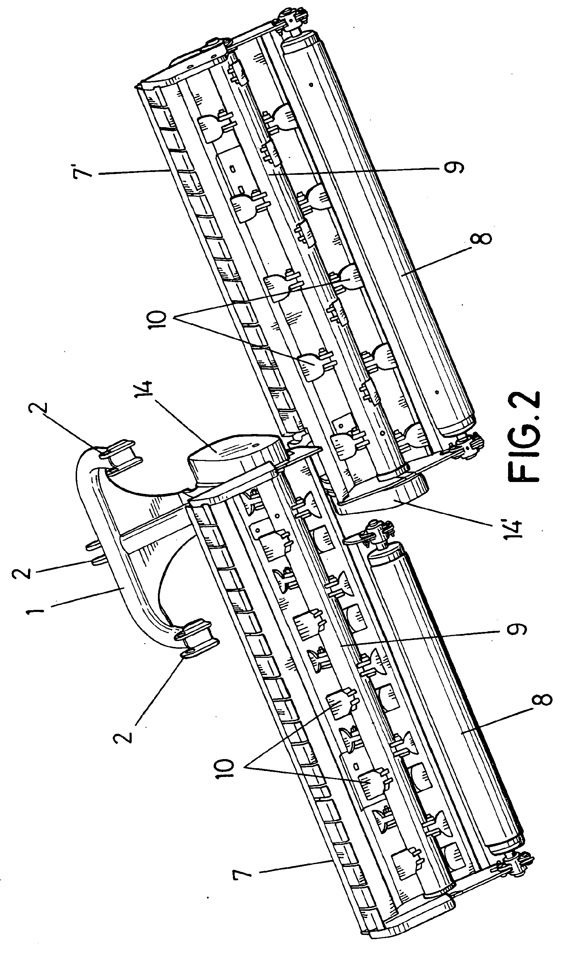

In the light of the above-mentioned figures, particularly of figures 1 and 2, it may be observed that the land clearing machine proposed by the invention is structured on the basis of the classic three-point hitch (1), provided with three pairs of lugs (2) for coupling to the tractor vehicle, a hitch (1) which is extended rearwards in sturdy shaft (3) on which is mounted, with the aid of intermediate support (4-4'), the machine drive shaft (5), equipped with the classic power take-off (6) for coupling to the tractor vehicle, a drive shaft (5) which further has the particularity of being the swivel shaft for two heads or housings (7-7') with their respective ground support rollers (8) as well as their respective rotor shafts (9) carrying the classic hammers (10), so that the aforesaid shaft (5) transmits motion to both rotor shafts (9) directly, irrespective of what the position of said rotor shafts (9) is, i.e. the horizontal or working position shown in figure 1, or the inoperative vertical position, after an upward swivel.

For changing the position of the heads (7-7') and of their respective rotor shafts (9), between the support rod (3) and each of the protection housings (7-7'), there is a hydraulic cylinder (11-11') mounted. This is jointed to the afore-mentioned elements by way of respective pairs of lugs (12) and (13), so that when these cylinders (11-11') are extended the respective heads adopt a horizontal position, which may be modified in accordance with the possible irregularities of the ground, whilst when the cylinders (11-11') are retracted, the heads (7-7') swivel upwards up to a position of verticality, in which they do not protrude in the slightest from the sides of the tractor vehicle, which means that they may be conveyed along any communicating roadway over which the tractor vehicle itself is allowed to travel.

Operated via the power take-off (6), motion is transmitted from the shaft (5) to the drive shafts (9) by way of the drive systems, which may be concealed by the covers (14).

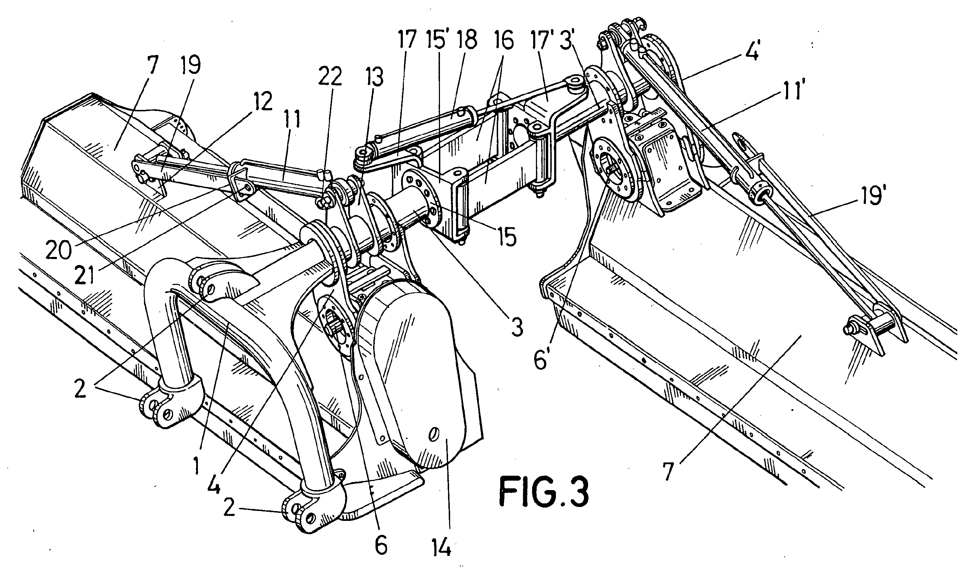

As mentioned above and in accordance with the alternative embodiment shown in figure 3, it is feasible for the heads (7-7') to have an adjustable relative position, for which purpose the drive shaft (5) of the previous case disappears and instead the heads (7-7') are provided with respective power take-offs (6-6'), independent of each other, and the support shaft (3) is split into two halves (3-3'), each one of which ends in a flange (15) integral with a plate (15'), so that both plates are related to each other by means of a pair of connecting rods (16), which configure a deformable parallelogram with the afore-mentioned plates (15'), said plates (15') having counterposed extensions (17-17'), between which there extends a hydraulic cylinder (18) that acts diagonally on the aforesaid parallelogram, so that when this takes the form of a rectangle, as represented in figure 3, the two heads (7-7') are the maximum distance apart in a fore-aft direction and they adopt an intermediate position in the transverse direction, and when said parallelogram is deformed in one direction or another, head (7') approaches head (7), with a parallel transverse movement, either in one direction or the other, which means that the effective length of both heads (7-7') may be adjusted at discretion from two substantially different dimensional values so as to bring the working width of the machine into line with the needs of each specific case.

Lastly, it should also be mentioned that each of the hydraulic cylinders (11-11') with which the heads (7-7') are swivelled from the working position shown in the figures to the vertical transport position is assisted by a safety plate (19), integral at one of their ends with the actual head (7), naturally with the possibility of rotation, and assisted by a guide (20) mounted on the actual body of the cylinder (11-11'), finished at the end with a hole (21) through which the plate (19) may be engaged on a hook (22) on one of the cylinder (11) swivel lugs (13), an engagement which obviously takes place when the cylinder (11) is fully retracted, i.e. in the position for raising the head (7), a position which means that said head (7) is locked irrespective of whether the cylinder (11) may be actuated accidentally or whether a fault may occur in its hydraulic circuit.

## Claims

1. Land clearing machine, of the type that may be coupled to a farm tractor vehicle and operated by said vehicle, being provided with means for coupling to the three-point hitch system at the rear of said vehicle and with means for rolling support on the ground, as well as crushing means driven from the tractor vehicle power take-off, **characterised in that** at least two rotor shafts (9) are established in it, in a parallel and transverse layout, offset in the fore-aft direction and overlapping in the transverse direction, each rotor shaft (9) being fitted with its respective protection housing (7-7'), and the two housings being swivel-mounted on a common fore-aft shaft (5), which is also the shaft for transmitting motion to the rotor shafts of said housings.

2. Land clearing machine, according to claim 1, **characterised in that** said drive shaft (5) has drive mechanisms that connect it directly to the rotor shafts (9) by the inner end of the latter in an independent manner, in such a way that said drive means do not interfere with the swivelling of each rotor shaft along with its respective housing in relation to the drive shaft, swivelling with said housing in relation to the latter.

3. Land clearing machine, according to the preceding claims, **characterised in that** the drive shaft (5) is mounted, with the aid of end supports (4-4'), on an upper rod (3) parallel to said shaft, directly integral with the machine three-point hitch (1) for coupling to the tractor vehicle, while said upper rod has hydraulic cylinders (11-11') fitted that extend between said rod and the protection housings (7-7') of the different rotor shafts (9), said cylinders acting as the means of positional control for such housings, which permit the horizontal disposition of the rotor shafts, in the working position of the machine, and a certain inclination of either of them in order to adapt to possible irregularities in the ground, or else an upright vertical disposition in which the housings with their rotors are tucked in at the sides in relation to the tractor vehicle, in transport conditions.

4. Land clearing machine, according to claim 3, **characterised in that** each hydraulic cylinder (11-11') is assisted by a safety plate (19) which enables the respective cylinder to be locked mechanically in its maximum retraction position, i.e. in the raised position of the respective head (7-7').

5. Land clearing machine, according to claims 1, 3, and 4, **characterised in that** the swivel shafts for the heads (7-7') are physically independent of each other, as there is no direct drive from one to the other. These have their respective independent power take-offs (6-6'), the support shaft (3) that links the heads (7-7') being split into two halves joined to each other by means of connecting rods (16) making up a deformable parallelogram, on which in the diagonal position there acts a hydraulic cylinder (18), which permits a relative transverse movement of the rear head (7') in relation to the front head (7) in order to modify the working width of the machine as required.
